# DEMANDE DE BREVET EUROPEEN

(11) **EP 1 253 564 A2**
(43) Date de publication de la demande: **30.10.2002**
(21) Numéro de dépôt: 02015506.5
(22) Date de dépôt: 19.04.2001
(51) Int. Cl.: G07F 19/00, G07F 7/08

(54) **Procédé et dispositif de paiement électronique**

(30) Priorité: 19.04.2000 FR 0005025; 04.10.2000 FR 0013101; 24.11.2000 FR 0015215
(62) Demande divisionnaire de: 01928004.9
(71) Demandeur: Magicaxess, 75011 Paris (FR)
(72) Inventeur: Kremer, Gilles, 92170 Vanves (FR); Lafon, Martin, 91400 Orsay (FR)
(74) Mandataire: Benech, Frédéric

(57) **Abrégé**

La présente invention concerne un procédé de signature, comportant une étape d'attribution d'une signature à un utilisateur, une étape d'ouverture d'une session de communication, sur un réseau informatique, entre un système informatique émetteur et un système informatique récepteur distant, une étape d'authentification de l'utilisateur dudit système informatique émetteur, une étape de transmission, depuis le système informatique émetteur au système informatique récepteur distant, par l'intermédiaire du réseau informatique, d'une information représentative de données à signer, une étape de signature, par le système informatique récepteur distant, avec la signature attribuée à l'utilisateur, de l'information représentative des données à signer, et lorsqu'un destinataire du document souhaite vérifier l'authenticité desdites données, une étape de vérification de la signature de l'information représentative desdites données.

## Description

La présente invention concerne un procédé et un dispositif de paiement électronique.

Les sites Internet qui proposent des fournitures ou des prestations payantes demandent souvent des paiements par carte de paiement. Cependant, les utilisateurs savent que si le numéro de leur carte de paiement est copié avec la date d'expiration, des paiements peuvent être effectués avec le compte attaché à cette carte sans leur accord. Ces utilisateurs sont donc très réticents à utiliser un moyen de paiement aussi peu protégé.

De leur côté, les sites marchands savent que les clients peuvent annuler, ou "répudier" les paiements fait avec les cartes de paiement parce qu'ils ne signent pas le paiement.

Du fait de sa nature ouverte, Internet a augmenter les besoins de sécurité de transmission de données. En effet, l'architecture même de l'Internet le rend particulièrement vulnérable : le protocole IP, totalement décentralisé, fait circuler les datagrammes, ou "paquets" sans qu'ils soient protégés. Les adresses IP elles-mêmes, gérées par les DNS (Domain Name Servers pour serveurs de noms de domaines), ne sont pas à l'abri d'actions de malveillance. Les systèmes d'exploitation ont des failles de sécurité. D'où une liste impressionnante de menaces :
- écoute de paquets ou "sniffing";
- substitution de paquets ou "spoofing";
- piratage de DNS;
- déni de service;
- intrusions; et
- dissémination de programmes malveillants, virus et chevaux de Troie.

Chacun des aspects de la présente invention vise à remédier à certains de ces inconvénients. A cet effet, la présente invention propose d'effectuer un paiement sur un premier réseau de communication en mettant en oeuvre un numéro de moyen de paiement à usage unique transmis ou validé en mettant en oeuvre un deuxième réseau de communication, préférentiellement sécurisé et comportant des adresses uniques de terminaux, par exemple un réseau de téléphonie mobile, deux sessions de communication étant simultanément ouvertes sur les deux réseaux de communication. Ainsi, même si ce moyen de paiement est recopié, la copie est inutilisable, parce que le moyen de paiement est à usage unique, c'est-à-dire qu'il ne peut pas être utilisé deux fois. De plus, le moyen de paiement ne peut être volé sans disposer simultanément de deux terminaux reliés simultanément aux deux réseaux de communication.

Selon un aspect, la présente invention vise un procédé de paiement comportant une opération d'ouverture d'une session de communication entre un premier terminal d'utilisateur et un serveur de site marchand, sur un premier support de communication, caractérisé en ce qu'il comporte, durant ladite session de communication :
- une opération de transmission par le terminal utilisateur d'une information d'identification de l'utilisateur,
- une opération de transmission à un serveur de paiement de l'information d'identification de l'utilisateur,
- une opération de constitution par ledit terminal utilisateur d'un certificat de paiement à usage unique,
- une opération de transmission par le serveur de paiement d'une information confidentielle à un deuxième terminal utilisateur, par intermédiaire d'un deuxième support de communication sur lequel chaque adresse est attribuée à au plus un terminal utilisateur,
- une opération de transmission par le premier terminal de ladite information confidentielle ;
- une opération de vérification, par le serveur de paiement, de correspondance de l'information confidentielle reçue de la part du premier terminal sur le premier réseau de communication avec l'information confidentielle transmise au deuxième terminal utilisateur et,
- en cas de correspondance, une opération de validation de paiement.

Selon un aspect de la présente invention, le paiement est effectué par l'intermédiaire d'une session de communication avec un serveur de paiement, sur le premier réseau de communication, session pendant laquelle le deuxième réseau de communication est utilisé pour authentifier le payeur en lui transmettant une information confidentielle sur le deuxième réseau, qu'il retransmet sur le premier réseau. En cas d'authentification, le serveur de paiement transmet une information de paiement au payé afin que la transaction soit effectuée.

Les inventeurs ont déterminé qu'il y avait un besoin pour à la fois authentifier un client qui effectue un paiement, et lui permettre de ne pas transmettre un numéro de carte de paiement, tout en mettant en oeuvre les moyens connus pour payer avec tout moyen de paiement. En effet, cela évite de modifier les systèmes utilisés par les sites, tout en leur garantissant une authentification des clients et une sécurité des moyens de paiement.

Selon un aspect de la présente invention, pendant une session de communication entre un payeur (client) et un payé (commerçant ou marchand) le paiement est effectué en transmettant sur le deuxième réseau de communication à adresse unique, un numéro de moyen de paiement que l'utilisateur transmet au payé et que le payé utilise pour obtenir le paiement, de la même manière qu'un numéro de carte de paiement embossée.

Dans ce mode de réalisation, la simultanéité de la session de communication entre le terminal utilisateur et le serveur du site marchand, sur le premier réseau de communication et les opérations de paiement assure une protection sécurité accrue car la session sur le premier réseau ne peut être modifiée par un tiers.

Dans des modes de réalisation particuliers, le moyen de paiement à usage unique est transmis au client puis le client est authentifié pour valider l'utilisation du moyen de paiement à usage unique.

Dans des modes de réalisation particuliers, le client est authentifié puis un moyen de paiement à usage unique lui est transmis.

Dans des modes de réalisation particuliers, l'utilisation du moyen de paiement à usage unique authentifie le client.

Dans chacun de ces modes de réalisation, le client est protégé car le moyen de paiement à usage unique ne peut être réutilisé par un tiers, en relation avec le compte bancaire ou de crédit du client. Le site est aussi protégé car le paiement est signé, ainsi le client est authentifié fortement et il ne peut donc pas répudier le paiement.

On observe que le terme "moyen de paiement à usage unique" recouvre les cas où un numéro est pris, par exemple aléatoirement, dans un ensemble de numéros de moyens de paiement réservés à la mise en oeuvre du présent procédé. Ce terme recouvre aussi le cas où le moyen de paiement peut être réutilisé pendant un nombre de paiement prédéterminé, jusqu'à un montant prédéterminé ou pendant une durée prédéterminée. Cependant, préférentiellement, le moyen de paiement à usage unique ne peut servir que pour une transaction correspondant à une session de communication en cours entre le terminal de l'utilisateur et le serveur du site marchand.

Dans un mode de réalisation particulier, chaque moyen de paiement à usage unique est affiché sur un écran de terminal d'accès à Internet. La présente invention vise une interface graphique de paiement qui comporte l'affichage d'un moyen de paiement à usage unique dont l'utilisateur est authentifié pour valider l'utilisation de ce moyen de paiement.

La présente invention vise aussi un moyen de paiement à usage unique auquel est associée une authentification effectuée conformément aux moyens exposés dans la demande de brevet FR 97 13825 déposée le 4 novembre 1997. Exposés succinctement, ces moyens comportent la transmission d'une information confidentielle sur un support de communication, typiquement un réseau de téléphonie ou de transmission de messages alphanumériques sans fil, la saisie de cette information confidentielle par l'utilisateur sur le terminal d'accès à Internet et la transmission de l'information confidentielle par Internet pour authentifier l'utilisateur.

La présente invention vise aussi à résoudre le problème de la multiplication des clés d'encryption et des risques qui en découlent. En cryptologie, une clé est insérée au moment du chiffrement des données afin d'assurer la confidentialité de celles-ci. Les différentes normes de sécurité disponibles, pour le courrier électronique, pour les sessions de communication du web (SSL ou Secure Socket Layer pour couche de sécurité), pour le protocole IP lui-même (IPsec), mettent en oeuvre tout l'arsenal des méthodes modernes : authentification et signature, échange de clé conventionnelle, chiffrement symétrique. Des centaines de millions de clés RSA ont ainsi été produites.

Il se pose alors de nouveaux problèmes : comment gérer ces clés ? Comme le note Jacques Stem, Directeur du Département Informatique de l'Ecole Normale Supérieure "il est illusoire d'utiliser un chiffrement RSA en laissant traîner ses clés secrètes sur un disque dur mal protégé contre les intrusions" (Dans un article publié dans "Le Monde" daté du 12 septembre 2000). En outre se pose la question de lier une clé publique RSA à son propriétaire légitime.

La présente invention vise, selon un aspect, un procédé de certification, caractérisé en ce qu'il comporte
- une opération de transmission de données depuis un système informatique émetteur à un système informatique récepteur, sur un premier support de communication,
- une opération de génération d'une trace desdites données représentatives desdites données, par le système informatique récepteur,
- une opération de transmission d'une partie de ladite trace à un dispositif de communication, sur un deuxième support de communication différent du premier support de communication,
- une opération de réception de ladite partie de trace par le système informatique émetteur,
- une opération de transmission de ladite partie trace depuis le système informatique émetteur au système informatique récepteur, et
- une opération de vérification de la correspondance de la partie de trace reçue par le système informatique récepteur avec la trace générée par le système informatique récepteur.

Grâce à ces dispositions, la partie de trace est liée auxdites données et peut servir à détecter une modification ultérieure desdites données.

Selon des caractéristiques particulières du procédé tel que succinctement exposé ci-dessus, ladite trace est représentative d'un condensât desdites données. Grâce à ces dispositions, la partie de trace permet de détecter toute modification ultérieure desdites données.

Selon des caractéristiques particulières, le procédé tel que succinctement exposé ci-dessus comporte une opération de transmission d'un identifiant d'un utilisateur du système informatique émetteur. Grâce à ces dispositions, une authentification de l'utilisateur du système informatique émetteur ou une signature électronique peuvent être effectuées.

Selon des caractéristiques particulières, le procédé tel que succinctement exposé ci-dessus comporte une opération de mise en correspondance dudit identifiant avec une adresse du dispositif de communication sur le deuxième support de communication. Grâce à ces dispositions, l'adresse du dispositif de communication est une adresse qui correspond à l'utilisateur du système informatique émetteur.

Selon des caractéristiques particulières du procédé tel que succinctement exposé ci-dessus, ladite trace est représentative d'une clé privée conservée par le système informatique récepteur. Grâce à ces dispositions, le système informatique récepteur effectue une signature desdites données.

Selon des caractéristiques particulières, le procédé tel que succinctement exposé ci-dessus, comporte une opération de mise en correspondance dudit identifiant avec ladite clé privée. Grâce à ces dispositions, le système informatique récepteur effectue une signature desdites données au nom de l'utilisateur du système informatique émetteur.

Selon des caractéristiques particulières, le procédé tel que succinctement exposé ci-dessus, comporte une opération de troncature de ladite trace, et en ce que au cours de l'opération de transmission d'au moins une partie de ladite trace, le résultat de ladite troncature est transmis. Grâce à ces dispositions, la partie de ladite trace comporte moins de symboles que ladite trace.

Selon des caractéristiques particulières du procédé tel que succinctement exposé ci-dessus, le premier support de communication est l'Internet. Grâce à ces dispositions, les données peuvent être transmises depuis n'importe quel système informatique relié à l'Internet.

Selon des caractéristiques particulières du procédé tel que succinctement exposé ci-dessus, le deuxième support de communication est un réseau sans fil. Grâce à ces dispositions, l'authentification de l'utilisateur du système informatique émetteur peut être effectuée en tout lieu.

Selon des caractéristiques particulières du procédé tel que succinctement exposé ci-dessus, au cours de l'opération de transmission desdites données, un identifiant d'un système informatique destinataire est transmis, ledit procédé comportant une opération de transmission desdites données depuis le système informatique récepteur à un système informatique destinataire. Grâce à ces dispositions, le système informatique récepteur peut servir d'intermédiaire dans une transmission entre le système informatique émetteur et le système informatique destinataire. Il peut, en outre, assurer des fonctions de datage, de notarisation ou de certification de remise en main propre au destinataire desdites données.

Selon des caractéristiques particulières, le procédé tel que succinctement exposé ci-dessus comporte une opération de mise en correspondance desdites données avec une clé publique et en ce que au cours de l'opération de transmission desdites données audit système informatique destinataire, ladite clé publique est transmise. Grâce à ces dispositions, Le destinataire desdites données peut vérifier l'identité de l'émetteur desdites données, par la mise en oeuvre de la clé publique.

Selon des caractéristiques particulières, le procédé tel que succinctement exposé ci-dessus comporte une opération de génération d'une information confidentielle par le système informatique récepteur et une opération de transmission à un deuxième dispositif de communication d'une information confidentielle à une dispositif de communication sur lé deuxième support de communication, par le système informatique récepteur, une opération de réception de ladite information confidentielle par le système informatique récepteur, sur le premier moyen de communication et une opération de vérification de correspondance entre l'information confidentielle transmise par le système informatique récepteur avec l'information confidentielle reçue par le système informatique récepteur.

Grâce à ces dispositions, le destinataire desdites données est authentifié.

La présente invention vise aussi un dispositif de certification, caractérisé en ce qu'il comporte
- un moyen de transmission de données depuis un système informatique émetteur à un système informatique récepteur, sur un premier support de communication,
- un moyen de génération d'un trace desdites données représentatives desdites données, par le système informatique récepteur,
- un moyen de transmission d'au moins une partie de ladite trace à un dispositif de communication, sur un deuxième support de communication différent du premier support de communication,
- un moyen de réception de ladite trace par le système informatique émetteur,
- un moyen de transmission de ladite trace depuis le système informatique émetteur au système informatique récepteur, et
- un moyen de vérification de la correspondance de la trace reçue par le système informatique récepteur et de la trace générée par le système informatique récepteur.

Les caractéristiques particulières et les avantages dudit dispositif correspondent aux caractéristiques particulières et avantages du procédé tels que succinctement exposé ci-dessus.

La présente invention vise, selon un aspect, un procédé de certification, caractérisé en ce qu'il comporte :
- une opération de réception d'un certificat jetable;
- une opération de chiffrement de données avec ledit certificat jetable;
- une opération de transmission des données chiffrées;
- une opération de signature de la transmission desdites données; et
- une opération de révocation dudit certificat jetable.

Selon un aspect, la présente invention vise un procédé de certification, caractérisé en ce qu'il comporte
- une première opération de signature de données par un dispositif de fourniture desdites données sans clé privée de l'utilisateur qui fournit lesdites données; et
- une deuxième opération de signature de données qui substitue à la première signature, une deuxième signature mettant en oeuvre une clé privée dudit utilisateur.

Selon un aspect, la présente invention vise un procédé de transmission de données, caractérisé en ce qu'il comporte
- une opération de transmission desdites données d'un premier système informatique à un deuxième système informatique;
- une opération de génération d'un sceau ou condensât représentatif desdites données, à partir desdites données;
- une opération de transmission dudit sceau ou condensât par ledit deuxième système informatique;
- une opération d'authentification de l'émetteur desdites données mettant en oeuvre ledit sceau ou condensât ; et
- une opération de vérification dudit sceau ou condensât.

Grâce à chacun de ces aspects, les clés, sceaux, condensâts ou certificats ne sont pas stockés sur un terminal utilisateur, ce qui les protège contre tout risque de vol ou de copie. En outre, la certification peut ainsi être indépendante du terminal mis en oeuvre par le signataire, ce qui rend la signature portable d'un système à un autre.

Selon des caractéristiques particulières de chacun des aspects de la présente invention, au cours de l'opération de génération de certificat jetable, une clé privée est générée. Grâce à ces dispositions, le certificat jetable possède les mêmes caractéristiques de sécurité qu'une clé privée.

Selon des caractéristiques particulières de chacun des aspects de la présente invention, au cours de l'opération de chiffrement, une trace des données à transmettre est déterminée sous la forme connue sous le nom de condensât (en anglais «hash»). Grâce à ces dispositions, toute modification des données à transmettre après la génération de ce condensât est détectable par utilisation du condensât.

Selon des caractéristiques particulières de chacun des aspects de la présente invention, au cours de l'opération de chiffrement, est mise en oeuvre une routine applicative préliminairement téléchargée. Grâce à ces dispositions, la transmission des données à transmettre est protégée par ladite routine.

Selon des caractéristiques particulières de chacun des aspects de la présente invention, au cours de l'opération de transmission des données chiffrées, les données à transmettre sont aussi transmises. Grâce à ces dispositions, toute modification des données à transmettre peut être détectée en utilisant les données chiffrées.

Selon des caractéristiques particulières de chacun des aspects de la présente invention, au cours de l'opération de signature, un sceau secret est transmis à un récepteur sur un réseau de télécommunication et saisi par le signataire sur un poste utilisateur qui a transmis les données à transmettre. Grâce à ces dispositions, l'utilisateur du poste utilisateur est authentifié par le fait qu'il dispose simultanément d'un récepteur sur le réseau de télécommunication.

Selon des caractéristiques particulières de chacun des aspects de la présente invention, le procédé comporte une opération de substitution de signature au cours de laquelle une clé privée du signataire est associée aux données à transmettre. Grâce à ces dispositions, la clé privée d'un utilisateur peut être conservée en lieu sur, sur un serveur de sécurité, de telle manière qu'aucun poste utilisateur mis en oeuvre par l'émetteur de données à transmettre n'ait à conserver ladite clé privée. La clé privée est ainsi particulièrement protégée.

Selon des caractéristiques particulières de chacun des aspects de la présente invention, le procédé comporte une opération d'association d'une date et d'une heure aux données transmises. Grâce à ces dispositions, la transmission des données est horodatée.

Selon des caractéristiques particulières de chacun des aspects de la présente invention, le procédé comporte une opération de mise en mémoire des données transmises et d'une signature. Grâce à ces dispositions, il y a notarisation des données transmises.

Selon des caractéristiques particulières de chacun des aspects de la présente invention, le certificat jetable est un certificat à durée de vie inférieure à une heure. Grâce à ces dispositions, le même certificat ne peut être utilisé pendant plus qu'une durée prédéterminée.

La présente invention vise aussi un dispositif de certification, caractérisé en ce qu'il comporte
- un moyen de génération d'un certificat jetable;
- un moyen de réception d'un certificat jetable;
- un moyen de chiffrement de données avec ledit certificat jetable;
- un moyen de transmission des données chiffrées;
- un moyen de signature de la transmission desdites données; et
- un moyen de révocation dudit certificat jetable.

Selon un aspect de la présente invention, l'utilisateur ou client s'identifie sur un premier support de communication, par exemple Internet, en fournissant un certificat, par exemple conforme à l'infrastructure à clé publique PKL et ledit certificat comporte l'adresse unique d'un terminal dudit utilisateur sur un deuxième support de communication, par exemple un numéro de téléphone mobile de l'utilisateur. Selon des caractéristiques particulières, l'adresse unique sur le deuxième support est chiffrée avec une clé publique de telle manière que seuls certains organismes habilités ou certaines autorités de certification peuvent déchiffrer ladite adresse unique. Selon des caractéristiques particulières, le certificat qui comporte ladite adresse unique sur le deuxième support de communication pointe sur, c'est-à-dire identifie ou comporte, un autre certificat, par exemple conforme à l'infrastructure à clé publique PKI, qui ne comporte pas ladite adresse unique.

D'autres avantages, buts et caractéristiques de la présente invention ressortiront de la description qui va suivre faite dans un but explicatif et nullement limitatif en regard du dessin annexé dans lequel :
- la figure 1 représente des transmissions de messages entre des entités participant à une transaction, selon un premier mode de réalisation,
- la figure 2 représente des transmissions de messages entre des entités participant à une transaction, selon un second mode de réalisation,
- la figure 3 représente une image d'un moyen de paiement à usage unique électronique,
- la figure 4 représente des transmissions de messages entre des entités participant à une transaction, selon un troisième mode de réalisation,
- la figure 5 représente des transmissions de messages entre des entités participant à une transaction, selon un quatrième mode de réalisation,
- la figure 6 représente une succession d'opérations effectuées par un terminal utilisateur et un serveur de certification, dans un mode de réalisation particulier de la présente invention,
- la figure 7 représente une succession d'opérations effectuées par un terminal utilisateur et le serveur de certification, dans un autre mode de réalisation particulier de la présente invention,
- la figure 8 représente une succession d'opérations effectuées par un terminal utilisateur et le serveur de certification, dans un autre mode de réalisation particulier de la présente invention, et
- la figure 9 représente un organigramme de mise en oeuvre d'un autre mode de réalisation de la présente invention.

Dans toute la description, le terme "terminal à adresse unique" indique un terminal sur un réseau de communication dont l'adresse ne peut être attribuée à un autre terminal. Par exemple, un téléphone ou un pageur est un terminal à adresse unique.

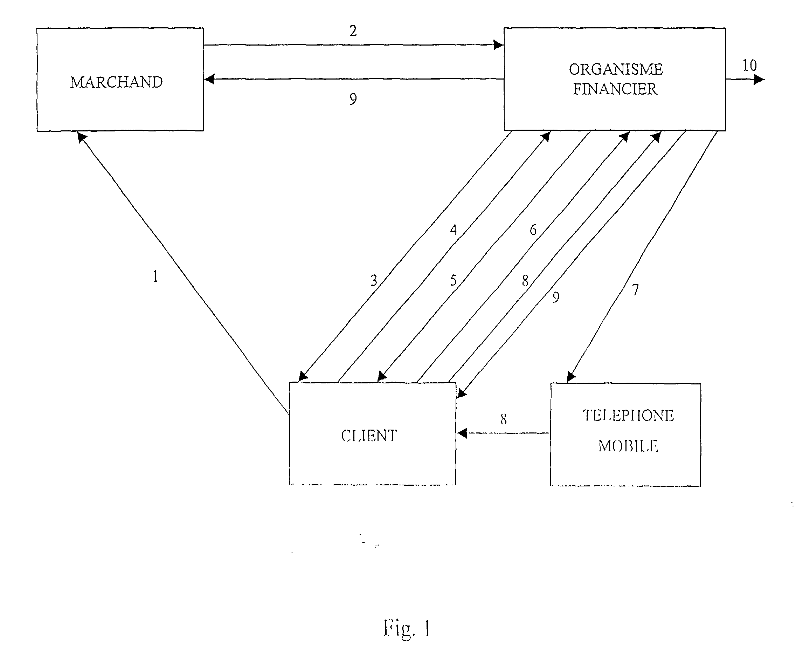

Dans le schéma de transaction exposé en figure 1, un client est inscrit et possède un compte chez un organisme financier qui met en oeuvre un serveur de paiement adapté à déterminer une adresse de terminal sur un support de communication dans lequel chaque adresse est attribuée à au plus un terminal. Ce compte lui permet d'avoir un fichier de conservation de données confidentielles connu sous le nom de « Server Side Wallet ». Dans ce fichier sont stockés les informations relatives au mode de paiement dont le client dispose et notamment relatives à un chéquier électronique.

L'organisme financier est de type 'Issuer', c'est-à-dire émetteur de moyen de paiement, ici à usage uniques, ou il est un intermédiaire ayant passé des accords avec des banques 'Issuer'.

Le marchand a un accord avec l'organisme financier 'Issuer' et il a un compte ouvert qui ne se substitue pas obligatoirement à son compte bancaire classique dans sa banque dite 'Acquirer' car elle recoit les paiements pour le compte du marchand.

Le marchand présente, sur la page de paiement de son site, une icône proposant à ses clients de payer par intermédiaire d'un moyen de paiement appelé « moyen de paiement à usage unique électronique ». On observe que cette icône peut être celle d'une banque ou d'un type de carte bancaire.

En figure 1, sont représentées les étapes suivantes de mise en oeuvre du procédé objet de la présente invention :
1/ Le client décide de payer les articles qu'il a choisis et référencés dans son panier (connu en France sous le nom de "caddy", marque déposée et en anglais sous le nom de "shopping kart"). Nous supposons dans la suite de la description que le client choisit comme mode de paiement le "moyen de paiement à usage unique électronique" proposé par le marchand. On observe que ce choix peut être effectué en sélectionnant une icône de banque ou une icône représentant un carnet de chèques ou un chèque, par exemple.
2/ Le marchand renvoie le traitement de cette demande vers l'organisme financier (ou intermédiaire) qui propose ce service de paiement par moyen de paiement à usage unique électronique. Dans des modes de réalisation exemplaires, le client se retrouve directement sur un site de l'organisme financier.
3/ L'organisme financier demande au client de s'identifier pour accéder au service de chéquier électronique.
4/ Le client s'identifie. Dans des modes de réalisation exemplaires, le client donne son nom, son prénom, un nom d'utilisateur et/ou un mot de passe connu de lui seul.
5/ L'organisme financier présente au client le moyen de paiement à usage unique électronique rempli avec les éléments correspondant à la transaction (nom du marchand, montant, horodatage, ...) pour acceptation et signature électronique. Dans des modes de réalisation exemplaires, le moyen de paiement à usage unique est représenté sous la forme d'un chèque sur l'écran du terminal du client.
6/ Le client valide son acceptation. Dans des modes de réalisation exemplaires, le client sélectionne avec un moyen de pointage tel qu'une souris, un bouton "validation de paiement".
7/ L'organisme financier calcule une signature électronique, ou sceau, c'est-à-dire une séquence de symboles non prédictibles et envoie un certificat lié à la transaction et contenant cette séquence, via un réseau téléphonique mobile, tel que le réseau GSM, sur le mobile du client. Dans des modes de réalisation exemplaires, la signature ou sceau est transmise sous la forme d'un message court connu sous le nom de "SMS".
8/ Le client s'authentifie et signe le moyen de paiement à usage unique électronique en ressaisissant la signature électronique du certificat sur le clavier de son poste de consultation (ou terminal) connecté sur le réseau Internet (principe de la signature électronique).
9/ L'organisme financier renvoie la confirmation du paiement au client et au marchand afin que celui-ci livre les produits achetés.
10/ L'organisme financier traite la transaction en transmettant les informations au réseau de compensation bancaire afin que le montant de la transaction soit crédité sur le compte du marchand dans sa banque 'Acquirer'.

Selon un mode de réalisation particulier, un utilisateur d'un premier terminal de communication connecté à un réseau de communication, tel qu'un ordinateur personnel connecté à l'Internet, ouvre une session de communication avec un site marchand. Durant la session de communication, le site marchand propose un paiement par moyen de paiement à usage unique électronique et, en cas d'acceptation par le client, le site marchand ou le premier terminal ouvrent une seconde session de communication avec un site fournisseur de moyen de paiement à usage uniques électronique ou le terminal émet un moyen de paiement à usage unique électronique

A cet effet, sur une fenêtre du premier terminal, une fenêtre qui représente le moyen de paiement à usage unique comporte un, plusieurs ou, préférentiellement, tous les champs suivants :
- un nom associe au site marchand,
- un montant de paiement,
- un nom associé à l'utilisateur,
- un numéro de compte attribué à l'utilisateur,
- un nom d'organisme payeur,
- un horodatage ("time-stamping" en anglais), et
- une zone ou l'utilisateur doit fournir ladite information confidentielle.

Pour effectuer le paiement, une information confidentielle est communiquée à l'utilisateur, par intermédiaire d'un deuxième support de communication, tel qu'un réseau de téléphonie mobile ou un réseau de transmission de messages alphanumériques.

L'utilisateur saisi alors l'information confidentielle sur le premier terminal et le premier terminal transmet cette information confidentielle au site marchand.
Après vérification de correspondance de l'information confidentielle reçue de la part du premier terminal sur le premier réseau de communication avec l'information confidentielle transmise au deuxième terminal utilisateur, le paiement est validé.

Préférentiellement, le procédé comporte une opération de transmission, par le site marchand, d'une demande d'émission du certificat de paiement à un site tiers. Préférentiellement, le site tiers transmet un montant disponible sur un compte attribué audit utilisateur. Préférentiellement, le procédé comporte une opération d'affectation d'un certificat d'intégrité à l'ensemble constitué du moyen de paiement à usage unique et de l'information confidentielle saisie par l'utilisateur.

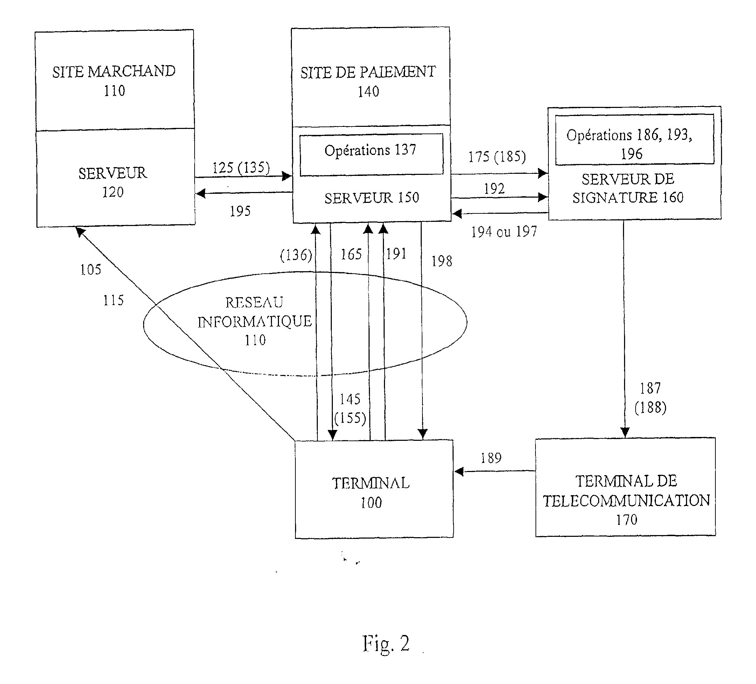

Dans le mode de réalisation particulier illustré en figure 2, un client accède, par l'intermédiaire d'un terminal 100 et d'un réseau informatique 110, par exemple Internet, à un site marchand 120, hébergé par un serveur de réseau 130 (opération 105). Le client s'identifie en donnant ses noms, prénoms et adresse ou par la transmission, par le terminal 100 d'un certificat unique délivré au client, par exemple un certificat lié à l'infrastrucrure à clé publique PKI. Pour payer, on suppose dans la suite de la description de la figure 2 que le client sélectionne une option de paiement par moyen de paiement à usage unique électronique proposée par le site marchand 120 (opération 115). On observe que le site marchand 120 peut ne proposer que cette option, car, à la différence des paiements par carte bancaire sans signature, le client ne peut pas répudier un paiement fait avec signature ou authentification.

Le serveur de réseau 130 transfert alors le client sur un site de paiement 140 hébergé par un serveur de réseau 150, ou serveur de paiement (opération 125). Dans des modes de réalisation exemplaires préférentiels, le serveur de réseau 130 du site marchand 120 transmet au serveur de réseau 150 du site de paiement 140 de l'information représentative de l'identité du marchand, de références bancaires du marchand, de l'identité du client, d'un certificat unique délivré au client conformément à l'infrastructure à clé publique PKI, du montant de la transaction, de l'horodatage et/ou des biens ou services objets de la transaction (opération 135). Dans des modes de réalisation exemplaires, le client fournit tout ou partie de ces informations au serveur 150 par l'intermédiaire du terminal 100, par exemple par transmission d'un certificat unique délivré au client conformément à l'infrastructure à clé publique PKI ou par saisie au clavier (opération 136).

Le serveur de paiement 150 détermine si le paiement peut être autorisé, par exemple en fonction de l'identité du client, du montant du paiement, d'un état d'un compte financier ou bancaire du client, selon des procédures connues (opération 137). Si le paiement peut être autorisé, le serveur 150 du site de paiement 140 transmet une information , par exemple une image, représentative d'un moyen de paiement à usage unique électronique, par exemple une image de chèque, au terminal 100 du client (opération 145). Dans des modes de réalisation exemplaires, ce moyen de paiement à usage unique électronique est déjà partiellement ou complètement pré-rempli, avec toute ou partie de l'information transmise au cours de l'opération 135 (opération 155).

Le client valide ou non le paiement en sélectionnant, ou non, un bouton de validation lié à l'information reçue par le terminal 100 au cours de l'opération 145 (opération 165). Lorsque le client valide le paiement, le serveur de réseau 150 du site de paiement 140 transmet à un serveur de signature 160 une information identifiant le client (opération 175). Dans des modes de réalisation exemplaires, le serveur 150 transmet au serveur de signature de l'information relative au paiement, par exemple l'objet du paiement, le montant du paiement, l'horodatage et/ou le nom du marchand. Le serveur de signature 160 recherche dans une base de données ou dans une table de correspondance, une adresse unique d'un terminal de télécommunication 170 lié au client, par exemple un numéro de téléphone mobile sur un réseau de téléphonie mobile (opération 185).

Le serveur de signature 160 détermine alors un sceau à usage unique, sous la forme d'une séquence de symboles (opération 186). Dans des modes de réalisation exemplaires, le sceau dépend d'au moins un élément de la transaction, par exemple, le montant, l'identité du marchand, l'identité du client, un certificat unique délivré au client, l'horodatage et/ou l'objet de la transaction. Par exemple, le sceau est déterminé comme une fonction mathématique (par exemple un "hash" ou condensât) de tout ou partie de ces éléments. Préférentiellement, le sceau dépend de l'identité du client et/ou d'un certificat unique délivré au client (par exemple lié à l'infrastructure PKI pour "public Key Infrastructure" ou infrastructure à clé publique).

Le serveur de signature 160 transmet au terminal de télécommunication 170 le sceau à usage unique (opération 187). Dans des modes de réalisation exemplaires, le serveur de signature 160 transmet au terminal de télécommunication 170 au moins un élément de la transaction, par exemple, le montant, l'identité du marchand, l'identité du client, l'horodatage et/ou l'objet de la transaction en plus du sceau (opération 188).

Pour valider le paiement, le client lit le sceau sur un écran du terminal 170 ou écoute la séquence de symbole dictée par un serveur vocal sur un haut-parleur du terminal 170 puis saisit le sceau sur le terminal 100. par exemple au clavier ou par dictée vocale (opération 189). Dans des variantes, le client connecte le terminal 170 au terminal 100 pour que la transmission du sceau ait lieu automatiquement.

Le sceau est transmis par le terminal 100 au serveur de réseau 150 (opération 191). Le serveur 150 transmet le sceau au serveur de signature 160 (opération 192). Le serveur de signature vérifie le sceau (opération 193) et, en cas de correspondance entre le sceau émis au cours de l'opération 187 et le sceau reçu au cours de l'opération 192, le serveur de signature 160 transmet une information de validation de signature au serveur 150 (opération 194). Le serveur 150 transmet une information de validation de paiement au serveur de réseau 130 (opération 195). Le serveur de signature invalide le sceau pour tout autre paiement (opération 196).

En cas d'absence de correspondance entre le sceau émis au cours de l'opération 187 et le sceau reçu au cours de l'opération 192, le serveur de signature 160 transmet une information de défaut de signature au serveur 150 (opération 197) et le serveur 150 informe le client du défaut de signature et lui redemande de fournir le sceau (opération 198) et les opération 191 et suivantes se répètent. Après trois échecs, c'est-à-dire trois opérations 197, le serveur de signature invalide le sceau et le serveur de paiement 150 transmet une information d'absence de paiement au serveur 130.

Bien que dans la description de la figure 2, les serveurs 130, 150 et 160 aient été représentés comme séparés, dans des modes de réalisation exemplaires, au moins deux des serveurs 130, 150 et 160 peuvent être confondus.

Préférentiellement, les opérations 125 et suivantes ont toutes lieu au cours de la même session de communication entre le terminal 100 et le serveur 150. Préférentiellement, cette session de communication est sécurisée, par exemple encryptée selon le standard d'encryption SSL.

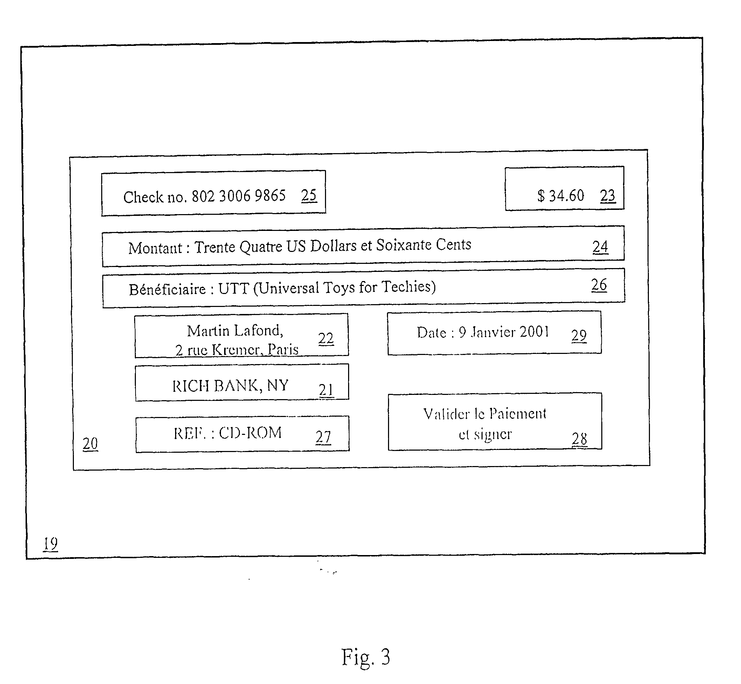

En figure 3 est représenté une image d'un moyen de paiement à usage unique électronique, telle qu'elle peut être affichée sur un écran 19 d'un terminal accessible à un client. Cette image 20 ressemble à celle d'un chèque comportant des zones d'information :
- une zone 21 indiquant des coordonnées de l'organisme émetteur,
- une zone 22 indiquant des coordonnées du client,
- une zone 23 indiquant le montant du paiement, en chiffres,
- une zone 24 indiquant le montant du paiement, en lettres,
- une zone 25 indiquant un numéro de moyen de paiement,
- une zone 26 indiquant des coordonnées du marchand,
- éventuellement, une zone de références 27 où est indiqué l'objet de la transaction,
- une zone 28 de signature, qui prend ici la forme d'un bouton "valider le paiement et signer", et
- une zone d'horodatage 29, comprenant une date et, éventuellement, une heure de transaction.

Tout ou partie des zones 21 à 27 et 29 sont remplies automatiquement en fonction d'informations fournies par un serveur de site marchand et/ou un serveur de paiement, afin que le client n'ait qu'à vérifier les informations portées par le moyen de paiement à usage unique électronique et à valider le paiement en cliquant d'abord sur le bouton "valider le paiement et signer", puis en saisissant un sceau qu'il reçoit sur un deuxième support de communication à adresses uniques, par exemple une réseau de téléphonie mobile.

Préférentiellement, l'image du moyen de paiement à usage unique est automatiquement conservée en mémoire non volatile du terminal du client.

Selon un aspect de la présente invention, un moyen de paiement à usage unique électronique est associé à un récapitulatif d'éléments de transaction comportant au moins le montant de la transaction, et, préférentiellement, une identification du marchand.

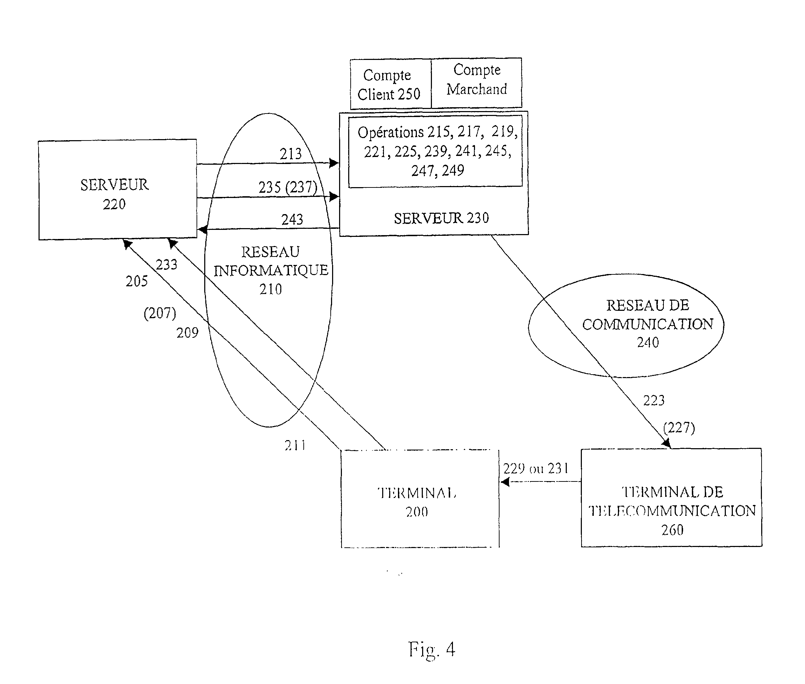

Dans le mode de réalisation particulier illustré en figure 4. un terminal de client 200 accède par l'intermédiaire d'un premier réseau de communication 210, par exemple Internet, à un serveur de site marchand 220 (opération 205).

Préférentiellement, la communication entre le terminal 200 et le serveur 220 passe en mode de communication sécurisée, par exemple encryptée (opération 207) avant que l'utilisateur n'entre dans une zone de paiement du site marchand.

Le terminal 200 fournit au serveur 220, un identifiant de l'utilisateur du terminal 200, par exemple ses noms, prénoms et adresse, un nom d'abonné avec ou sans mot de passe, un cookie, fichier placé par le site marchand sur le terminal 200 (opération 209) ou un certificat unique délivré à l'utilisateur du terminal 200 conformément à l'infrastructure à clé publique PKI.

Le client déclenche les opérations de paiement en sélectionnant une fonction de paiement sur une page dudit site, par exemple an cliquant sur un bouton (opération 211). Tout en conservant, jusqu'à la fin des opérations de paiement, la session de communication ouverte avec le terminal 200 relié au premier moyen de communication 210, le serveur 220 du site marchand fournit, par exemple sur le premier réseau de communication, une identification du client à un serveur de paiement 230, préférentiellement avec un identifiant du site marchant, et un montant de paiement (opération 213). Le serveur de paiement 230 détermine une adresse sur le deuxième réseau de communication 240, préférentiellement à adresses uniques, par exemple un réseau téléphonique, par exemple mobile (opération 215).

Le serveur de paiement 230 détermine un numéro de moyen de paiement à usage unique (opération 217) dont il conserve en mémoire (opération 219) la relation avec un compte 250 du client, par exemple un compte de carte de crédit ou un compte bancaire. Dans des modes de réalisation exemplaires, le numéro de moyen de paiement à usage unique dépend de l'identité du client et/ou d'éléments de la transaction, par exemple le montant, l'horodatage ou l'identité du marchand.

Dans des modes de réalisation exemplaires, le numéro de moyen de paiement à usage unique est pris parmi un ensemble de numéros similaires à des numéros de carte de paiement embossées.

Le serveur de paiement 230 détermine si le paiement est autorisé, par exemple en fonction du montant du paiement et d'information d'autorisation de paiement associées au compte 250 (opération 221). Le serveur de paiement 230 transmet le numéro de moyen de paiement à usage unique à un terminal 260 relié au deuxième réseau de communication 240 qui possède ladite adresse sur le deuxième réseau de communication, par exemple par le biais d'un message court (opération 223). Eventuellement, le serveur de paiement 230 détermine une durée maximale de validité du numéro de moyen de paiement à usage unique (opération 225). Eventuellement, le serveur de paiement transmet au terminal 260 sur le deuxième réseau de communication 240, le montant du paiement et/ou un identifiant du site marchand (opération 227). Le terminal 260 reçoit l'information transmise et retransmet au terminal 200, par un lien électronique (opération 229) entre les terminaux 260 et 200 ou, préférentiellement, par recopie manuelle effectuée par l'utilisateur des terminaux 200 et 260 dans une fenêtre d'une page du site marchand prévue à cet effet (opération 231), le numéro de paiement à usage unique. Le terminal 200 transmet au serveur 220 le numéro de moyen de paiement à usage unique (opération 233).

Dans des modes de réalisation exemplaires, le numéro de paiement à usage unique prend la forme d'un numéro de carte de paiement de type connu et l'utilisateur utilise le numéro de paiement à usage unique comme un numéro de carte de paiement embossé sur une carte de paiement en matière plastique.

Le serveur 220 du site marchand transmet le numéro de moyen de paiement à usage unique au serveur de paiement 230 (opération 235). Le serveur du site marchand 220 transmet, éventuellement, un montant de paiement, un identifiant du site marchand et/ou un identifiant du compte du marchand, en particulier celles de ces informations qui n'ont pas encore été transmises au serveur de paiement 230 (opération 237). Le serveur de paiement 230 vérifie la correspondance entre le numéro de moyen de paiement à usage unique que le serveur de paiement 230 a transmis à ladite adresse sur le deuxième réseau de communication et le numéro de moyen de paiement à usage unique que le serveur de paiement reçoit du serveur du site marchand (opération 239). En cas de correspondance et si le numéro de moyen de paiement à usage unique est encore valide (test 241), le serveur de paiement 230 émet une information d'autorisation de paiement au serveur 220 du site marchand (opération 243), provoque le paiement, éventuellement différé, depuis le compte du client vers le compte du marchand, en modifiant des données conservées en mémoire en relation avec le compte du client (opération 245) et en provoquant la modification de données conservées en mémoire en relation avec un compte du marchand (opération 247), et invalide une nouvelle utilisation du même numéro de moyen de paiement à usage unique en relation avec les comptes bancaires ou de crédit de l'utilisateur (opération 249).

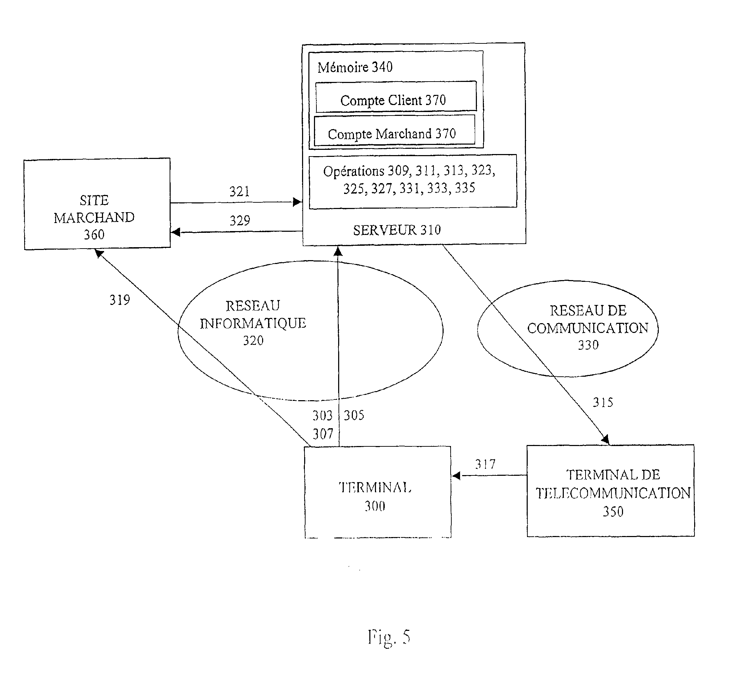

Dans un mode de réalisation particulier illustré en figure 5, un terminal utilisateur 300 client accède à un serveur de paiement 310 sur un premier réseau de communication 320, par exemple Internet (opération 303) et demande à un serveur de paiement 310 un numéro de moyen de paiement à usage unique, au cours d'une session de communication sur un premier réseau de communication 320 (opération 305). Le terminal 300 transmet au serveur de paiement 310 un identifiant de l'utilisateur, par exemple ses noms, prénoms et adresse, un nom d'abonné avec ou sans mot de passe, un cookie, fichier placé par le serveur de paiement 310 sur le terminal 300 ou un certificat unique délivré au client conformément à l'infrastructure à clé publique PKI (opération 307).

Le serveur de paiement 310 détermine une adresse sur un deuxième réseau de communication 330, préférentiellement à adresses uniques, par exemple un réseau téléphonique, par exemple mobile (opération 309). Le serveur de paiement 310 détermine aussi un numéro de moyen de paiement à usage unique dont le moyen de paiement conserve en mémoire 340 la relation avec un compte du client, par exemple un compte de carte de crédit ou un compte bancaire (opération 311). Le serveur de paiement 310 détermine une durée d'utilisation du moyen de paiement à usage unique (opération 313). Dans des modes de réalisation exemplaires, le numéro de moyen de paiement est pris parmi un ensemble de numéros disponibles similaires à des numéros de cartes de paiement embossées.

Le serveur de paiement 310 transmet le numéro de moyen de paiement à usage unique à un terminal 350 relié au deuxième réseau de communication 330 qui possède ladite adresse sur le deuxième réseau de communication 330, par exemple par le biais d'un message court (opération 315). L'utilisateur reçoit l'information transmise (opération 317) et utilise ce moyen de paiement à usage unique pour payer un achat sur un site marchand 360 (opération 319), de manière connue en soi, par exemple en l'introduisant dans des espaces prévus pour recevoir des numéros de cartes bancaires. Le serveur du site marchand 360 transmet le numéro de moyen de paiement à usage unique au serveur de paiement 310 avec un montant de paiement, un identifiant du site marchand et/ou un identifiant du compte du marchand (opération 321).

Le serveur de paiement 310 vérifie la correspondance entre le numéro de moyen de paiement à usage unique qu'il a transmis au terminal 350 et le numéro de moyen de paiement à usage unique que le serveur de paiement 310 reçoit du serveur du site marchand 360 (test 323) et, en cas de correspondance, vérifie que la durée maximale d'utilisation du moyen de paiement à usage unique n'est pas dépassée (opération 325) et détermine si le paiement est autorisé, par exemple en fonction du montant du paiement à effectuer et d'information associée au compte du client 370 (test 327). Si le paiement est autorisé et si la durée d'utilisation n'est pas dépassée, le serveur de paiement 310 émet une information d'autorisation de paiement au serveur 360 du site marchand (opération 329), provoque le paiement, éventuellement différé, depuis le compte du client vers le compte du marchand, en modifiant des données conservées en mémoire en relation avec le compte du client (opération 331) et en provoquant la modification de données conservées en mémoire en relation avec un compte du marchand 380 (opération 333), et invalide une nouvelle utilisation du même numéro de moyen de paiement à usage unique en relation avec les comptes bancaires ou de crédit de l'utilisateur (opération 335).

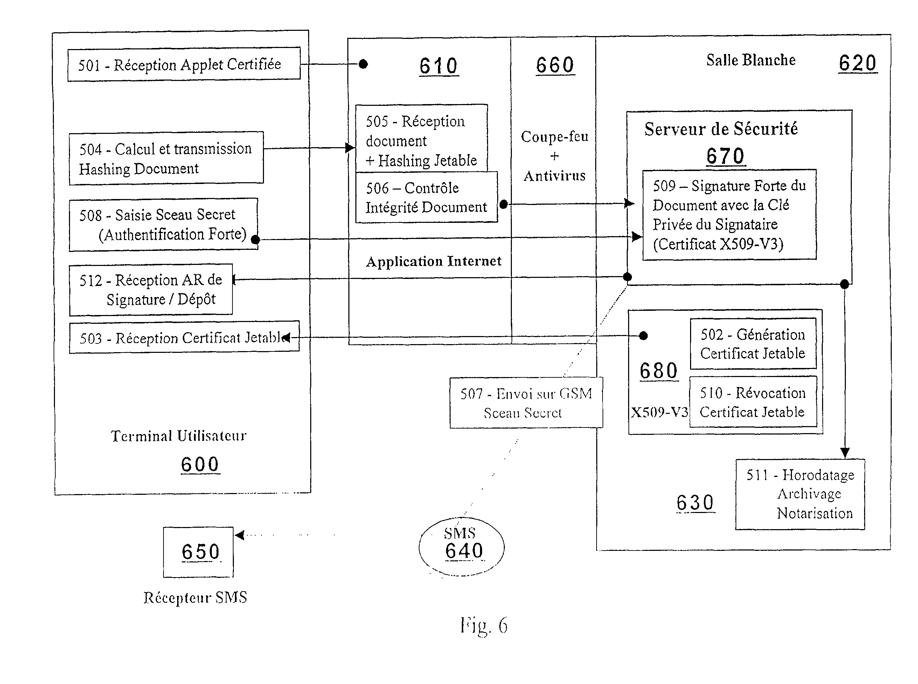

En figure 6 sont représentés un poste utilisateur ou système informatique émetteur 600, une application Internet 610, une salle blanche 620, une mémoire de stockage 630, un deuxième réseau de communication 640 et un récepteur 650 sur le deuxième réseau de communication 640. La salle blanche 620 comporte une protection pare-feu (en anglais "firewall") 660, un serveur de sécurité 670 et un générateur de certificats 680. Les opérations effectuées dans le mode de réalisation particulier illustré en figure 6 sont représentées dans des rectangles et numérotées de 501 à 512. L'application Internet 610 et la salle blanche 620 sont conjointement appelé système informatique récepteur.

Le poste utilisateur 600 est, par exemple, un ordinateur personnel (PC), un ordinateur de réseau (NC) ou un assistant numérique personnel (en anglais Personal Digital Assistant ou PDA) ou tout terminal permettant une communication à distance, borne intéractive, décodeur T.V., .... Le poste utilisateur 600 est doté d'un logiciel de communication à distance pour mettre en oeuvre l'application Internet 610, conjointement avec le serveur de sécurité 670. Ce logiciel de communication à distance peut être un logiciel de navigation ou un logiciel de courrier électronique, par exemple.

L'application Internet 610 permet la communication entre le poste utilisateur 600 et le serveur de sécurité 670 et la transmission de données depuis le poste utilisateur 600 vers la mémoire de stockage 630, par exemple par l'intermédiaire du serveur de sécurité 670. La salle blanche 620 est un espace protégé contre toute intrusion physique, telle qu'une salle de coffre d'une banque. La mémoire de stockage 630 est une mémoire adaptée à conserver des données pendant une longue période, qui dépasse une année.

Le deuxième réseau de communication 640 est, par exemple, un réseau téléphonique et, encore plus particulièrement un réseau de téléphonie mobile ou de récepteurs alphanumériques communément appelés "pageurs". Le deuxième réseau 640 est appelé "deuxième" par comparaison avec le réseau Internet, que l'on nomme aussi "premier" réseau dans la suite de la présente demande de brevet. Le deuxième réseau 640 est adapté à transmettre une clé, un sceau, un condensât ou un certificat depuis le serveur de sécurité 670 jusqu'au récepteur 650. Le récepteur 650 sur le deuxième réseau 640 peut, selon le type de deuxième réseau 640, être un téléphone mobile, un pageur ou un récepteur quelconque. Le récepteur 650 permet à l'utilisateur du poste utilisateur 600 de prendre connaissance d'informations transmises par le serveur de sécurité 670.

La protection pare-feu 660 est de type matérielle et/ou logicielle et interdit toute intrusion logicielle dans le serveur de sécurité 670. Le serveur de sécurité 670 est un serveur informatique de type connu. Enfin, le générateur de certificats 680 est adapté à générer des certificats jetables, par exemple de type conforme à l'infrastructure à clés publiques PKI, par exemple conforme à la norme X509-V3.

Le poste utilisateur 600 et le serveur de sécurité 670 sont conjointement adaptés à mettre en oeuvre les opérations indiquées ci-dessous. Par exemple, le serveur de sécurité 670 est adapté à fournir des routines applicatives ou "applets" au poste utilisateur 600.

Au début du processus de certification, on suppose que des données sont à transmettre de manière certifiée et signée depuis le poste utilisateur 600 jusqu'à la mémoire de stockage 630. L'utilisateur du poste utilisateur 600 se connecte au serveur de sécurité 620 pour lancer le processus de certification.

Au cours de l'opération 501, après identification de l'utilisateur au poste utilisateur 600, l'application Internet 610 télécharge une routine applicative certifiée et signée dans le poste utilisateur 600. On observe que la routine applicative en question peut n'être téléchargée que dans le cas où une copie de cette routine n'est pas déjà implantée dans le poste utilisateur 600. Cette caractéristique particulière permet de rendre portable le procédé de certification objet de la présente invention, sans ralentir ce processus dans le cas où l'utilisateur met successivement en oeuvre le même poste utilisateur 600, pour plusieurs certifications de données. Au cours de l'opération 502, le générateur de certificats 680 génère un certificat jetable, par exemple sous la forme d'une clé privée conforme à l'infrastructure à clés publiques PKI, par exemple conforme à la norme X509-V3. Par exemple, le certificat jetable est généré aléatoirement par le générateur 680.

Au cours de l'opération 503, le serveur de sécurité 670 transmet le certificat jetable au poste utilisateur 600. Au cours de l'opération 504, le poste utilisateur 600 met en oeuvre la routine applicative téléchargée au cours de l'opération 501 pour obtenir une trace des données à transmettre, appelé condensât (en anglais "hash"), trace qui dépend du certificat jetable généré au cours de l'opération 502 et des données à transmettre et qui permet la détection de toute modification ultérieure des données à transmettre.

Au cours de l'opération 505, les données à transmettre et le condensât sont téléchargés depuis le poste utilisateur 600 jusqu'à l'application Internet 610. De plus, des coordonnées de chaque destinataire des données à transmettre est transmis par le poste utilisateur 600 à l'application Internet 610. Ces coordonnées peuvent prendre la forme d'adresse de courrier électronique (en anglais "e-mail"), de numéro de téléphone ou de tout autre type d'information permettant de contacter chaque destinataire des données à transmettre. Au cours de l'opération 506, l'intégrité des données à transmettre est vérifiée, en mettant en oeuvre la clé jetable générée au cours de l'opération 502 et le condensât.

On observe qu'à la fin de l'opération 506, une copie des données à transmettre à été faite depuis le poste utilisateur 600 dans l'application Internet 610 et que cette copie est certifiée conforme à l'original grâce à la mise en oeuvre d'une clé jetable. Pour éviter que le certificat jetable soit réutilisé, au cours de l'opération 510, le certificat jetable est révoqué, c'est-à-dire qu'il devient inutilisable pour certifier des données.

En variante, le certificat jetable généré au cours de l'opération 502 est un certificat à durée de vie très courte, préférentiellement inférieure à une heure. Dans cette variante, l'opération 510 n'est pas exécutée puisqu'au delà de la durée de vie du certificat jetable, ce certificat n'est pas utilisable pour certifier des données.

i Les opérations 507 et 508 correspondent à un exemple de signature pouvant être utilisé en combinaison avec les opérations 501 à 506 ci-dessus. Au cours de l'opération 507, un sceau secret est généré et transmis, par l'intermédiaire du deuxième réseau 640, au récepteur 650. L'adresse du récepteur 650 sur le deuxième réseau est déterminée en mettant en correspondance l'identifiant de l'utilisateur transmis au cours de l'opération 501 avec ladite adresse, dans une table de correspondance. Préférentiellement, le sceau secret est calculé sur les éléments de signature du document. Préférentiellement, le sceau secret dépend des données à transmettre, de leur nombre, de leur contenu, de la date et de l'heure de la génération du sceau secret, de la clé privée de l'émetteur des données déterminée en correspondance avec l'identifiant de l'utilisateur transmis au cours de l'opération 501, de l'adresse internet ("adresse IP") du poste utilisateur 600 et/ou d'un numéro de la session Internet au cours de laquelle les données sont transmises. Selon un exemple de mise en oeuvre de l'opération 507, le sceau secret est obtenu par calcul d'un condensât des données à transmettre, par exemple sous la forme d'une séquence de vingt symboles, de chiffrement de ce condensât par la clé privée de l'utilisateur du poste utilisateur 600, et d'extraction d'une partie du résultat de ce chiffrement, par exemple huit symboles sur vingt.

Préférentiellement, au moins une coordonnée d'au moins un destinataire des données à transmettre est transmis avec le sceau secret, au cours de l'opération 507, de telle manière que l'utilisateur émetteur puisse identifier le message qu'il est en train de signer.

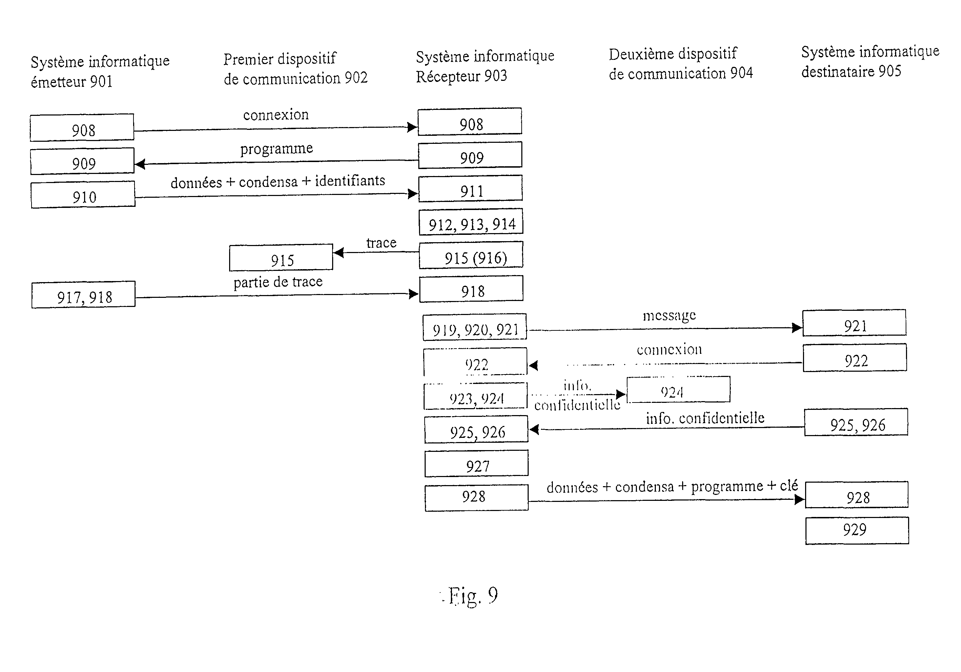

Le lecteur pourra se référer à la figure 9 et/ou à la demande de brevet PCT/FR98/02348, incorporée ici par référence, pour mieux connaître des exemples d'étapes mises en oeuvre au cours des opérations 507 et 508. Au cours de l'opération 508, l'utilisateur commun du poste utilisateur 600 et du récepteur 650 saisie le sceau secret et ce sceau secret est transmis au serveur de sécurité 670 où le sceau est vérifié, opération 509.

En variante, les opérations 507 à 509 sont remplacées par une opération de signature basée sur l'utilisation d'une carte à mémoire ("carte à puce") ou d'une mesure de biométrie ou toute autre moyen réputé fiable d'authentification forte de l'utilisateur.

A la fin de l'opération 508, les données transmises sont donc certifiées intègres et signées par l'utilisateur qui les transmet. L'opération 509 consiste à substituer une signature dite PKI (pour Public Key Infrastructure, soit infrastructure de clés publiques) à la signature effectuée au cours des opérations 507 et 508.

Au cours de l'opération 509, les données transmises sont signées avec la clé privée de l'utilisateur qui les a transmise (dit "signataire" des données).

Enfin, au cours de l'opération 511, les données transmises, certifiées et signées par clé privée sont transmises à la mémoire de stockage 630 avec une date et, éventuellement, une heure de telle manière qu'elles sont horodatées, archivées et notarisée.

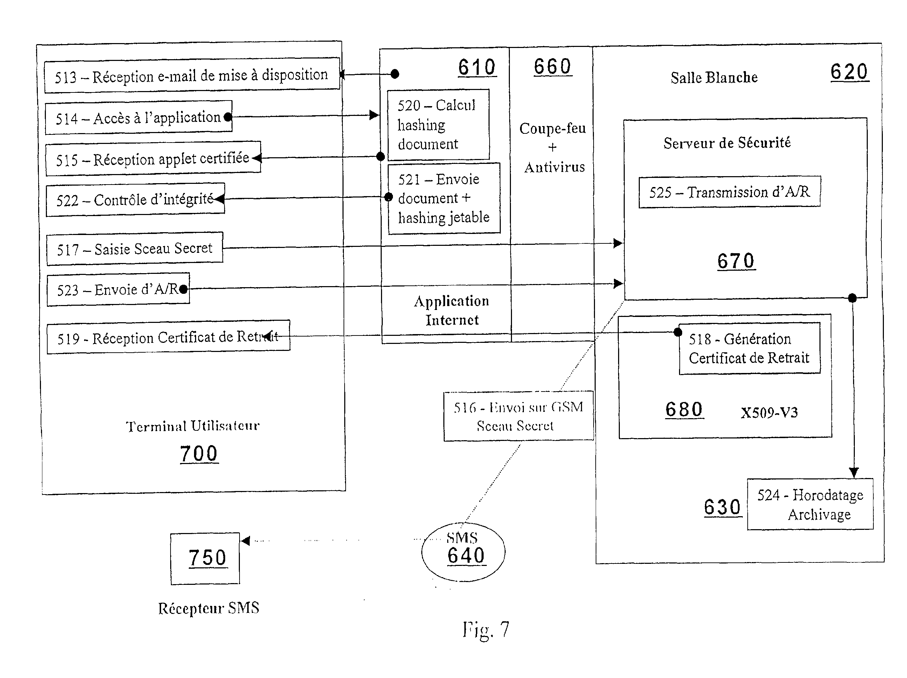

Dans une application de la présente invention à une remise en main propre des données transmises, un destinataire est, à la suite de l'opération 511, averti de la mise à sa disposition des données à transmettre et des opérations similaires aux opérations exposées ci-dessus sont mises en oeuvre pour effectuer une copie certifiée conforme sur le poste utilisateur du destinataire après avoir recueilli de sa part une signature. Par exemple, une signature telle qu'exposée dans la demande de brevet PCT/FR98/02348 peut, de nouveau être mise en oeuvre pour authentifier le destinataire. Un exemple d'une succession d'opérations mises en oeuvre pour cette remise en main propre est donné en figure 7.

En figure 7 sont représentés un poste utilisateur destinataire ou système informatique destinataire 700, l'application Internet 610, la salle blanche 620, la mémoire de stockage 630, le deuxième réseau de communication 640 et un récepteur 750 sur le deuxième réseau de communication 640. Les opérations effectuées dans le mode de réalisation particulier illustré en figure 7 sont représentées dans des rectangles et numérotées de 513 à 525. Ces opérations peuvent suivre les opérations 501 à 512 illustrées en figure 6 et effectuées en relation avec un poste utilisateur 600 généralement différent du poste utilisateur 700.

Le poste utilisateur destinataire 700 est, par exemple, un ordinateur personnel (PC), un ordinateur de réseau (NC) ou un assistant numérique personnel (en anglais Personal Digital Assistant ou PDA). Le poste utilisateur destinataire 700 est doté d'un logiciel de communication à distance pour mettre en oeuvre l'application Internet 610, conjointement avec le serveur de sécurité 670. Ce logiciel de communication à distance peut être un logiciel de navigation ou un logiciel de courrier électronique, par exemple.

L'application Internet 610 permet la communication entre le poste utilisateur 700 et le serveur de sécurité 670 et la transmission de données depuis le poste utilisateur 700 vers la mémoire de stockage 630, par exemple par l'intermédiaire du serveur de sécurité 670.

Le récepteur 750 sur le deuxième réseau 640 peut, selon le type de deuxième réseau 640, être un téléphone mobile, un pageur ou un récepteur quelconque. Le récepteur 750 permet à l'utilisateur du poste utilisateur destinataire 700 de prendre connaissance d'informations transmises par le serveur de sécurité 670.

Le poste utilisateur destinataire 700 et le serveur de sécurité 670 sont conjointement adaptés à mettre en oeuvre les opérations indiquées ci-dessous. Par exemple, le serveur de sécurité 670 est adapté à fournir des routines applicatives ou "applets" au poste utilisateur destinataire 700.

Au début du processus de certification, on suppose que des données sont à transmettre de manière certifiée et signée depuis la mémoire de stockage 630 jusqu'au poste utilisateur destinataire 700.

L'utilisateur du poste utilisateur destinataire 700 se connecte initialement au premier réseau, par exemple pour consulter des courriers électroniques.

Au cours de l'opération 513, l'application Internet 610 émet à destination du poste utilisateur destinataire 700 un courrier électronique (e-mail) qui indique que de l'information est mise à disposition de l'utilisateur du poste 700. Dans des modes de réalisation exemplaires, au moins une coordonnée de l'utilisateur émetteur est transmise dans ce courrier électronique pour que le destinataire puisse identifier l'utilisateur émetteur.

Au cours de l'opération 514, l'utilisateur accède à l'application interne 610 en sélectionnant son adresse Internet. Au cours de l'opération 515, l'application Internet 610 télécharge une routine applicative certifiée dans le poste utilisateur destinataire 700. On observe que la routine applicative en question peut n'être téléchargée que dans le cas où une copie de cette routine n'est pas déjà implantée dans le poste utilisateur 700. Cette caractéristique particulière permet de rendre portable le procédé de certification objet de la présente invention, sans ralentir ce processus dans le cas où l'utilisateur met successivement en oeuvre le même poste utilisateur destinataire 700, pour recevoir plusieurs ensembles données. On observe que les routines applicatives téléchargées au cours des opérations 501 et 515 peuvent être identiques pour permettre d'une part la transmission de données vers la mémoire 630 et, d'autre part, pour recevoir des données depuis cette mémoire.

Les opérations 516 et 517 correspondent à un exemple de signature pouvant être utilisé en combinaison avec les opérations 513 à 515 ci-dessus. Au cours de l'opération 516, un sceau secret est généré et transmis, par l'intermédiaire du deuxième réseau 640, au récepteur 750. Préférentiellement, le sceau secret est calculé sur les éléments de signature du document. Préférentiellement, le sceau secret dépend des données à transmettre, de leur nombre, de leur contenu, de la date et de l'heure de la génération du sceau, et/ou d'un numéro de la session Internet au cours de laquelle les données sont transmises.

Dans des modes de réalisation exemplaires, au moins une coordonnée de l'utilisateur émetteur des données à transmettre est transmise avec le sceau secret, au cours de l'opération 516, de telle manière que l'utilisateur destinataire puisse identifier l'utilisateur émetteur.

Le lecteur pourra se référer à la demande de brevet PCT/FR98/02348 pour mieux connaître des exemples d'étapes mises en oeuvre au cours des opérations 516 et 517. Au cours de l'opération 517, l'utilisateur commun du poste utilisateur destinataire 700 et du récepteur 750 saisie le sceau secret sur le poste utilisateur destinataire 700 et ce sceau secret est transmis au serveur de sécurité 670 où le sceau est vérifié. A la fin de l'opération 517, les données transmises sont donc certifiées intègres et signées par l'utilisateur qui les transmet.

En variante, les opérations 516 et 517 sont remplacées par une opération de signature basée sur l'utilisation d'une carte à mémoire ("carte à puce") ou d'une mesure de biométrie.

Au cours de l'opération 518, le générateur de certificats 680 génère un certificat de retrait, par exemple sous la forme d'une clé conforme à l'infrastructure à clés publiques PKI, par exemple conforme à la norme X509-V3. Le certificat de retrait contient la clé publique de l'utilisateur du poste utilisateur 600. Au cours de l'opération 519, le serveur de sécurité 670 transmet le certificat de retrait au poste utilisateur destinataire 700. Au cours de l'opération 520, l'application 610 détermine un condensât des données à transmettre, qui dépend du certificat de retrait généré au cours de l'opération 518 et des données à transmettre et qui permet la détection de toute modification ultérieure des données à transmettre.

Au cours de l'opération 521, les données à transmettre et le condensât sont téléchargés depuis l'application Internet 610 jusqu'au poste utilisateur destinataire 700. Au cours de l'opération 522, l'intégrité des données à transmettre est vérifiée, en mettant en oeuvre la clé publique contenue dans le certificat de retrait généré au cours de l'opération 518 et le condensât.

On observe qu'à la fin de l'opération 522, une copie des données à transmettre à été faite depuis la mémoire de stockage 630 jusqu'au poste utilisateur destinataire 700 et que cette copie est certifiée conforme à l'original grâce à la mise en oeuvre d'une clé jetable. Au cours de l'opération 523, un accusé de réception d'intégrité est transmis depuis le terminal utilisateur destinataire 700 vers le serveur de sécurité 670. Cet accusé de réception d'intégrité témoigne que les données à transmettre ont été transmises au terminal utilisateur destinataire 700 de manière intègre, c'est à dire que les données à transmettre n'ont pas été modifiées après l'opération 520.

Au cours de l'opération 524, une trace de la transmission des données à l'utilisateur destinataire est certifiée et mémorisée dans la mémoire de stockage 630. Cette date et, éventuellement, une heure est associée aux données transmises et est ainsi horodatées, archivées et notarisée. Au cours de l'opération 525, le serveur de sécurité met à disposition de l'émetteur des données transmises un accusé de réception qui l'informe que les données qu'il à transmise au cours de l'opération 504 ont été reçues par l'un de leur destinataire. On observe qu'un accusé de réception est transmis à l'émetteur des données pour chacun des destinataires des données.

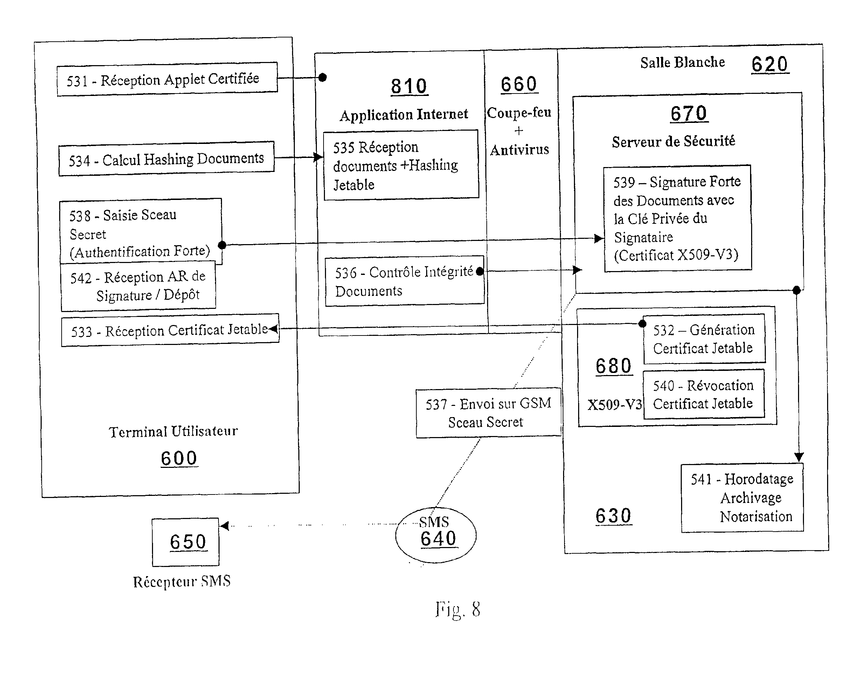

En figure 8 sont représentés le poste utilisateur ou système informatique émetteur 600, une application Internet 810, la salle blanche 620, la mémoire de stockage 630, le deuxième réseau de communication 640 et le récepteur 650 sur le deuxième réseau de communication 640. Les opérations effectuées dans le mode de réalisation particulier illustré en figure 8 sont représentées dans des rectangles et numérotées de 531 à 542. L'application Internet 810 et la salle blanche 620 sont conjointement appelées système informatique récepteur.

Le poste utilisateur 600 et le serveur de sécurité 670 sont conjointement adaptés à mettre en oeuvre les opérations 531 à 542 indiquées ci-dessous. Au début du processus de certification, on suppose que plusieurs ensembles de données sont à transmettre de manière certifiée et signée depuis le poste utilisateur 600 jusqu'à la mémoire de stockage 630. L'utilisateur du poste utilisateur 600 se connecte au serveur de sécurité 620 pour lancer le processus de certification.

Au cours de l'opération 531, après identification de l'utilisateur du poste utilisateur 600, l'application Internet 810 télécharge une routine applicative certifiée dans le poste utilisateur 600. On observe que la routine applicative en question peut n'être téléchargée que dans le cas où une copie de cette routine 5 n'est pas déjà implantée dans le poste utilisateur 600. Cette caractéristique particulière permet de rendre portable le procédé de certification objet de la présente invention, sans ralentir ce processus dans le cas où l'utilisateur met successivement en oeuvre le même poste utilisateur 600, pour plusieurs certifications de données. Au cours de l'opération 532, le générateur de 0 certificats 680 génère un certificat jetable, par exemple sous la forme d'une clé privée conforme à l'infrastructure à clés publiques PKI, par exemple conforme à la norme X509-V3. Par exemple, le certificat jetable est généré aléatoirement par le générateur 680.

Au cours de l'opération 533, le serveur de sécurité 670 transmet le certificat jetable au poste utilisateur 600. Au cours de l'opération 534, l'utilisateur sélectionne explicitement chacun des ensembles de données à transmettre. Par exemple, l'utilisateur du poste utilisateur 600 sélectionne, un par un, des fichiers à transmettre, chaque fichier constituant un ensemble de données à transmettre.

Toujours au cours de l'opération 534, le poste utilisateur 600, met en oeuvre la routine applicative téléchargée au cours de l'opération 531 pour obtenir un condensât de chacun des ensembles de données à transmettre, qui dépend du certificat jetable généré au cours de l'opération 532 et des données dudit ensemble. Chaque condensât permet la détection de toute modification ultérieure d'un ensemble de données à transmettre.

Au cours de l'opération 535, les ensembles données à transmettre et les condensât sont téléchargés depuis le poste utilisateur 600 jusqu'à l'application Internet 810. De plus, des coordonnées de chaque destinataire de chaque ensemble de données à transmettre est transmis par le poste utilisateur 600 à l'application Internet 610. Ces coordonnées peuvent prendre la forme d'adresse de courrier électronique (en anglais "e-mail"), de numéro de téléphone ou de tout autre type d'information permettant de contacter chaque destinataire des données à transmettre. Au cours de l'opération 536, l'intégrité des ensembles de données à transmettre est vérifiée, en mettant en oeuvre la clé jetable générée au cours de l'opération 532 et les condensât.

On observe qu'à la fin de l'opération 536, une copie des ensembles de données à transmettre à été faite depuis le poste utilisateur 600 dans l'application Internet 810 et que cette copie des ensembles de données est certifiée conforme à l'original grâce à la mise en oeuvre d'une clé jetable. Pour éviter que le certificat jetable soit réutilisé, au cours de l'opération 540, le certificat jetable est révoqué, c'est-à-dire qu'il devient inutilisable pour certifier des ensembles de données.

En variante, le certificat jetable généré au cours de l'opération 532 est un certificat à durée de vie très courte, préférentiellement inférieure à une heure. Dans cette variante, l'opération 510 n'est pas exécutée puisqu'au delà de la durée de vie du certificat jetable, ce certificat n'est pas utilisable pour certifier des données.

Les opérations 537 et 538 correspondent à un exemple de signature pouvant être utilisé en combinaison avec les opérations 531 à 536 ci-dessus. Au cours de l'opération 537, un sceau secret est généré et transmis, par l'intermédiaire du deuxième réseau 640, au récepteur 650. L'adresse du récepteur 650 sur le deuxième réseau est déterminée en mettant en correspondance l'identifiant de l'utilisateur transmis au cours de l'opération 531 avec ladite adresse, dans une table de correspondance. Préférentiellement, le sceau secret dépend des données à transmettre, de leur nombre, de leur contenu, de la date et de l'heure de la génération du sceau secret, de la clé privée de l'émetteur des données déterminée en correspondance avec l'identifiant de l'utilisateur transmis au cours de l'opération 531, de l'adresse interne ("adresse IP") du poste utilisateur 600 et/ou d'un numéro de la session Internet au cours de laquelle les données sont transmises. Selon un exemple de mise en oeuvre de l'opération 537, le sceau secret est obtenu par calcul d'un condensât des données à transmettre, par exemple sous la forme d'une séquence de 20 symboles, de chiffrement de ce condensât par la clé privée de l'utilisateur du poste utilisateur 600 et d'extraction d'une partie du résultat de ce chiffrement.

Préférentiellement, au moins une coordonnée d'au moins un destinataire des données à transmettre est transmis avec le sceau secret, au cours de l'opération 537, de telle manière que l'utilisateur émetteur puisse identifier les données à transmettre qu'il est en train de signer ou au moins un destinataire de ces données.

Le lecteur pourra se référer à la figure 9 et/ou à la demande de brevet PCT/FR98/02348 pour mieux connaître des exemples d'étapes muses en oeuvre au cours des opérations 537 et 538. Au cours de l'opération 538, l'utilisateur commun du poste utilisateur 600 et du récepteur 650 saisie le sceau secret et ce sceau secret est transmis au serveur de sécurité 670 où le sceau est vérifié, opération 539.

En variante, les opérations 537 à 539 sont remplacées par une opération de signature basée sur l'utilisation d'une carte à mémoire ("carte à puce") ou d'une mesure de biométrie.

A la fin de l'opération 538, les ensembles de données transmis sont donc certifiées intègres et signées par l'utilisateur qui les transmet. L'opération 539 consiste à substituer une signature dite PKI (pour Public Key Infrastructure, soit infrastructure de clés publiques) à la signature effectuée au cours des opérations 537 et 538.

Au cours de l'opération 539, les ensembles de données transmis sont signés avec la clé privée de l'utilisateur qui les a transmise (dit "signataire" des données).

Enfin, au cours de l'opération 541, les ensembles de données transmises, certifiées et signées par clé privée sont transmises à la mémoire de stockage 630 avec une date et, éventuellement, une heure, de telle manière qu'elles sont horodatées, archivées et notarisée.

Dans une application de la présente invention à une remise en main propre des ensembles de données transmises, pour chaque ensemble de données à transmettre, un destinataire est, à la suite de l'opération 541, averti de la mise à sa disposition de l'ensemble de données à transmettre et des opérations similaires aux opérations exposées ci-dessus sont mises en oeuvre pour effectuer une copie certifiée conforme sur le poste utilisateur du destinataire après avoir recueilli de sa part une signature. Un exemple d'une succession d'opérations mises en oeuvre pour cette remise en main propre est donné en figure 7.

La figure 9 représente un organigramme de mise en oeuvre d'un autre mode de réalisation de la présente invention. Dans la colonne la plus à gauche de la figure 9 sont représentées des opérations concernant un système informatique dit "émetteur" 901 mettant en oeuvre un premier support de communication. Dans la colonne à droite de la colonne la plus à gauche sont représentées des opérations concernant un premier dispositif de communication 902 mettant en oeuvre un deuxième support de communication. Dans la colonne centrale sont représentées des opérations concernant un système informatique 903 dit "récepteur" mettant en oeuvre le premier, le deuxième, un troisième et un quatrième support de communication. Dans la colonne la plus à droite sont représentées des opérations concernant un système informatique 905 dit "destinataire" mettant en oeuvre le troisième support de communication. Enfin, dans la colonne entre la colonne centrale et la colonne la plus à droite, sont représentées des opérations concernant un deuxième dispositif de communication 904 mettant en oeuvre le quatrième support de communication.

Le système informatique émetteur 901 et le premier dispositif de communication 902 sont utilisés par un utilisateur qui souhaite transmettre des données à un utilisateur destinataire qui utilise le deuxième dispositif de communication 904 et le système informatique destinataire 905. Par exemple, le système informatique émetteur 901 est un ordinateur personnel, ou un ordinateur de réseau, connecté au réseau Internet.

Par exemple, le système informatique destinataire 905 est un autre ordinateur personnel, ou un autre ordinateur de réseau, connecté au réseau Internet. Les premier et troisième réseau peuvent être confondus ou différents. Le premier et le troisième réseaux peuvent ainsi être l'Internet.

Les deuxième et quatrième réseaux peuvent, en particulier être des réseaux non filaires. Par exemple, le premier dispositif de communication 902 est un téléphone mobile ou un pageur. Par exemple, le deuxième dispositif de communication 904 est un téléphone mobile ou un pageur. Les deuxième et quatrième réseaux peuvent être confondus ou différents. En revanche, le premier et le deuxième support de communication sont différent. De plus, le troisième et le quatrième support de communication sont différents. Préférentiellement, les dispositifs de communication 901 et 904 possèdent des adresses uniques sur le deuxième et le quatrième réseau de communication, respectivement.

Selon un exemple de réalisation, le système informatique récepteur 903 est un serveur de réseau connecté à des interfaces de réseau pour communiquer sur les premier à quatrième réseaux. Dans la suite de la description de la figure 9, on considère que le système informatique récepteur 903 conserve des moyens nécessaires pour obtenir :
- une clé privée et une clé publique d'un utilisateur du système informatique émetteur 901,
- l'adresse du premier dispositif de communication 902 sur le deuxième support de communication, et
- l'adresse du deuxième dispositif de communication 904 sur le quatrième support de communication.

Par exemple, le système informatique récepteur 903 conserve en mémoire :
- la clé privée et la clé publique de chaque utilisateur susceptible de mettre en oeuvre le procédé décrit en figure 9,
- une table de correspondance entre des identifiants d'utilisateurs et des adresses sur le deuxième support de communication, et
- un moyen d'interroger une base de données conservant une table de correspondance entre des identifiants d'utilisateurs destinataires et des adresses sur le quatrième support de communication.
   Selon une variante, l'adresse de l'utilisateur destinataire sur le quatrième réseau est obtenue de la part de l'utilisateur émetteur, comme dans le cas illustré en figure 9.

Les opérations de démarrage et d'initialisation et les opérations d'arrêt des systèmes informatiques et des dispositifs de communication ne sont pas représentées en figure 9.

Au cours d'une opération 908, le système informatique émetteur 901 se connecte au système informatique récepteur 903, par l'intermédiaire du premier support de communication. Au cours dune opération 909, le système informatique récepteur 903 transmet au système informatique émetteur 901 un programme permettant de déterminer un condensa de données à transmettre.

Au cours d'opérations de transmission 910 et 911, le système informatique émetteur 901 transmet au système informatique récepteur 903, sur le premier support de communication :
- des données à transmettre au système informatique destinataire 905,
- un condensât des données à transmettre déterminé avec le programme transmis au cours de l'opération 909,
- un identifiant d'un utilisateur du système informatique émetteur 901 ou un identifiant du système informatique émetteur 901, et
- un identifiant du système informatique destinataire 905 et une adresse du deuxième moyen de communication 904.

Au cours d'une opération de mise en correspondance 912, le système informatique récepteur 903 met en correspondance ledit identifiant avec une clé privée de l'utilisateur du système informatique émetteur 901.

Au cours d'une opération de génération 913, le système informatique récepteur 903 génère une trace des données à transmettre. La trace est représentative des données à transmettre. Préférentiellement, ladite trace est représentative d'un condensât desdites données à transmettre et de la clé privée conservée par le système informatique récepteur 903. Par exemple, ladite trace est obtenue par une opération de signature du condensât par la clé privée de l'utilisateur du système informatique émetteur 901. Ainsi, ladite trace est liée audites données et toute modification ultérieure desdites données est détectable. De plus, la source desdites données est ainsi authentifiée par la clé privée de l'utilisateur.

Au cours d'une opération de mise en correspondance 914, l'identifiant de l'utilisateur du système informatique émetteur 901 est mis en correspondance avec une adresse du dispositif de communication 902 sur le deuxième support de communication.

Au cours d'une opération de transmission 915 d'une partie de ladite trace, au moins une partie de la trace déterminée au cours de l'opération 913 est transmise par le système informatique récepteur 903 au premier dispositif de communication 902. Par exemple, l'opération de transmission 915 comporte au cours de l'opération de troncature 916 au cours de laquelle la trace déterminée au cours de l'opération 913 est tronquée et le résultat de ladite troncature est transmis au premier dispositif de communication 902.

Au cours d'une opération de réception 917, ladite partie de trace est reçue par le système informatique émetteur 901. Par exemple, le premier dispositif de communication 902 affiche ladite trace sur un écran de visualisation et l'utilisateur du premier dispositif de communication 902 tape ladite trace sur un clavier du système informatique émetteur 901. Selon des variantes, l'utilisateur émetteur dicte ladite partie de trace qui est reconnue par un système de reconnaissance de voix ou l'utilisateur émetteur fournit ladite partie de trace au système informatique émetteur 901 par le biais d'une interface utilisateur quelconque.

Au cours d'une opération de transmission de ladite partie trace 918, ladite partie de trace est transmise depuis le système informatique émetteur 901 au système informatique récepteur 903.

Au cours d'une opération de vérification 919, le système informatique récepteur vérifie la correspondance de la partie de trace reçue par le système informatique récepteur 903 avec la trace générée par le système informatique récepteur 903. La correspondance est, dans l'exemple de la figure 9, une égalité entre la trace émise et la trace reçue. S'il n'y a pas correspondance, le système informatique récepteur indique à l'utilisateur émetteur qu'il n'a pas été authentifié, par le biais du premier support de communication ou par le biais du deuxième support de communication et invite l'utilisateur émetteur à recommencer les opérations illustrées en figure 9.

S'il y a correspondance, au cours d'une opération de mise en correspondance 920, le système informatique récepteur 903 met en correspondance lesdites données avec une clé publique de l'utilisateur émetteur.

Au cours d'une opération de communication 921, le système informatique récepteur 903 transmet un message, par exemple un courrier électronique, à l'utilisateur destinataire l'invitant à se connecter par le biais du troisième support de communication au système informatique récepteur 903. Selon des modes de réalisation exemplaires, un identifiant de l'utilisateur émetteur ou du système informatique 901 est transmis dans ledit message.

Au cours d'une opération de connexion 922, l'utilisateur destinataire effectue la connexion entre le système informatique destinataire 905 et le système informatique récepteur 903.

Au cours d'une opération de génération d'une information confidentielle 923, le système informatique récepteur 903 génère une information confidentielle. Au cours d'une opération de transmission 924, le dispositif récepteur 903 transmet ladite information confidentielle au deuxième dispositif de communication 904, par le biais du deuxième support de communication. Dans des modes de réalisation exemplaires, un identifiant de l'utilisateur émetteur est transmis avec ladite information confidentielle.

Au cours d'une opération de réception 925, ladite information confidentielle est reçue par le système informatique destinataire 905. Par exemple, le deuxième dispositif de communication 904 affiche ladite information confidentielle sur un écran de visualisation et l'utilisateur du deuxième dispositif de communication 904 tape ladite information confidentielle sur un clavier du système infonmatique destinataire 905. Selon des variantes, l'utilisateur destinataire dicte ladite information confidentielle qui est reconnue par un système de reconnaissance de voix ou l'utilisateur destinataire fournit ladite information confidentielle au système informatique destinataire 905 par le biais d'une interface utilisateur quelconque.

Au cours d'une opération de transmission de ladite information confidentielle 926, ladite information confidentielle est transmise depuis le système informatique destinataire 905 au système informatique récepteur 903.

Au cours d'une opération de vérification de correspondance 927, le système informatique récepteur 903 vérifie la correspondance entre l'information confidentielle transmise par le système informatique récepteur 903 et l'information confidentielle reçue par le système informatique récepteur 903. S'il n'y a pas correspondance, le dispositif informatique récepteur 903 indique à l'utilisateur destinataire qu'il n'a pas été authentifié, par le biais du troisième ou du quatrième support de communication et l'invite à recommencer les opérations 922 et suivantes.

Lorsqu'il y a correspondance, au cours d'une opération de transmission des données au système informatique destinataire 928, le système informatique récepteur 903 transmet au système informatique destinataire 905 les données à transmettre. Préférentiellement, le système informatique 903 transmet conjointement aux données à transmettre :
- une clé publique de l'utilisateur émetteur au système informatique destinataire 905,
- la trace desdites données à transmettre calculée au cours de l'opération, et
- un programme permettant de déterminer ledit condensât desdites données.

Au cours d'une opération 929, le système informatique destinataire détermine le condensât desdites données à transmettre calculé au cours de l'opération 913 et utilise la clé publique reçue au cours de l'opération 928 pour déterminer le condensât desdites données qui a servi à générer la trace transmise au cours de l'opération 928. Lorsque les deux condensât sont égaux, l'utilisateur destinataire a l'assurance que c'est l'utilisateur émetteur qui a transmis les données à transmettre et que ces données n'ont pas été modifiées depuis qu'elles ont été transmises par l'utilisateur émetteur.

Selon des variantes, les opérations présentées en figures 6, 7 ou 8 et les opérations présentées en figure 9 sont combinées de telle manière que, dans ces variantes, une clé jetable est utilisée pour la transmission des données d'un système informatique à un autre et une trace qui dépend des données à transmettre et, éventuellement d'une clé privée de l'utilisateur émetteur, est mise en oeuvre.

Selon un aspect de la présente invention et dans une variante de chacun des modes de réalisation exposés dans la présente description, l'utilisateur ou client s'identifie, sur le premier support de communication, par exemple Internet, en fournissant un certificat, par exemple conforme à l'infrastructure à clés publique PKI, et ledit certificat comporte l'adresse unique d'un terminal dudit utilisateur sur le deuxième support de communication, par exemple un numéro de téléphone mobile de l'utilisateur. Dans des modes de réalisation exemplaires de cette variante, l'adresse unique sur le deuxième support de communication est chiffrée avec une clé publique de telle manière que seuls certains organismes habilités ou certaines autorités de certification peuvent déchiffrer ladite adresse unique. Dans des modes de réalisation exemplaires de cette variante, le certificat qui comporte ladite adresse unique sur le deuxième support de communication pointe sur, c'est-à-dire identifie ou comporte, un autre certificat, par exemple conforme à l'infrastructure à clé publique PKI qui ne comporte pas ladite adresse unique.

Selon un aspect de la présente invention et selon une variante de chacun des modes de réalisation exposés ci-dessus, la signature par la retransmission d'un sceau confidentiel ou d'un condensât provoque l'émission conjointe d'une clé, par exemple conforme à l'infrastructure à clés publiques PKI.

On observe que tous les aspects de la présente invention exposés dans la présente description et, en particulier, en regard des différentes figures, ainsi que toutes les variantes et les modes de réalisation exemplaires, peuvent être avantageusement combinées.

## Revendications

1. Procédé de signature, **caractérisé en ce qu'**il comporte
- une étape d'attribution d'une signature à un utilisateur,
- une étape d'ouverture d'une session de communication, sur un réseau informatique, entre un système informatique émetteur et un système informatique récepteur distant,
- une étape d'authentification de l'utilisateur dudit système informatique émetteur,
- une étape de transmission, depuis le système informatique émetteur au système informatique récepteur distant, par l'intermédiaire du réseau informatique, d'une information représentative de données à signer,
- une étape de signature, par le système informatique récepteur distant, avec la signature attribuée à l'utilisateur, de l'information représentative des données à signer, et
- lorsqu'un destinataire du document souhaite vérifier l'authenticité desdites données, une étape de vérification de la signature de l'information représentative desdites données.

2. Procédé selon la revendication 1, **caractérisé en ce que** ladite signature attribuée à l'utilisateur est une clé privée d'une paire de signatures conformes à l'infrastructure à clés publiques PKI.

3. Procédé selon l'une quelconque des revendications 1 ou 2, **caractérisé en ce qu'**il comporte une étape de mémorisation, par le système informatique récepteur distant, de ladite signature attribuée à l'utilisateur.

4. Procédé selon l'une quelconque des revendications 1 à 3, **caractérisé en ce que** l'information représentative des données à signer est un condensât desdites données.

5. Procédé selon l'une quelconque des revendications 1 à 4, **caractérisé en ce que** l'étape de transmission de l'information représentative desdites données est effectuée en mode crypté.

6. Procédé selon l'une quelconque des revendications 1 ou 5, **caractérisé en ce que** au moins une étape de transmission de l'information représentative desdites données comporte une étape de transmission, par le système informatique récepteur distant audit système informatique émetteur d'une routine applicative.

7. Procédé selon l'une quelconque des revendications 1 à 6, **caractérisé en ce qu'**il comporte, pour chaque étape de signature de données, une étape de génération d'un certificat par le système informatique récepteur distant, ledit certificat étant mis en oeuvre par le système informatique émetteur, au cours de l'étape de transmission de l'information représentative des données et une étape de révocation dudit certificat après l'étape de transmission de l'information représentative des données.

8. Procédé selon l'une quelconque des revendications 1 à 7, **caractérisé en ce que** l'étape d'authentification de l'utilisateur comporte une étape de transmission, sur un terminal d'un réseau de télécommunication, différent du système informatique émetteur, d'une information non prédictible et une étape de transmission de l'information non prédictible, depuis le système informatique émetteur au système informatique récepteur distant.

9. Procédé selon l'une quelconque des revendications 1 à 8, **caractérisé en ce que** l'étape d'attribution de signature et l'étape de signature sont effectuées sur deux sous-systèmes informatiques distants reliés par un réseau informatique.

10. Procédé selon l'une quelconque des revendications 1 à 9, **caractérisé en ce que** l'étape de signature comporte une étape d'association d'une date et d'une heure aux données transmises, et au cours de l'étape de vérification de signature, la date de la signature est mise à disposition du tiers.
8. Procédé de certification selon l'une quelconque des revendications 1 à 7, **caractérisé en ce qu'**il comporte une opération

11. Procédé selon l'une quelconque des revendications 1 ou 10, **caractérisé en ce qu'**il comporte une étape de mémorisation de chaque étape de signature effectuée par le système informatique récepteur distant.

12. Procédé de certification selon l'une quelconque des revendications 1 à 11, **caractérisé en ce que** l'étape de signature comporte une opération de substitution, à un certificat mis en oeuvre au cours de l'étape de transmission de l'information représentative desdites données, la signature attribuée à l'utilisateur pour signer ladite information avec ladite signature.

13. Procédé de certification selon l'une quelconque des revendications 1 à 11, **caractérisé en ce que**, au cours de l'étape de vérification de signature, le tiers met en oeuvre une signature publique attribuée à l'utilisateur du système informatique émetteur au cours de l'étape d'attribution de signature audit utilisateur.
